# EUROPEAN PATENT APPLICATION

(11) **EP 4 825 822 A1**
(43) Date of publication of application: **21.10.2026**
(21) Application number: 23961168.4
(22) Date of filing: 15.12.2023
(51) Int. Cl.: C04B 28/04

(54) **ADHESIVE MATERIAL, EXCITATION MATERIAL, DRY-MIXED MORTAR, AND ADHESIVE MORTAR SLURRY**

(71) Applicant: Saint-Gobain Weber France, 94370 Sucy en Brie (FR)
(72) Inventor: LI, Lin, Shanghai 200245 (CN); WU, Fan, Shanghai 200245 (CN); CHENG, Cheng, Shanghai 200245 (CN)
(74) Representative: Reitstötter Kinzebach
(86) International application number: PCT/CN2023/139028
(87) International publication number: WO 2025/123308

(57) **Abstract**

An adhesive mortar slurry prepared from water and dry-mixed mortar, wherein the dry-mixed mortar comprises an adhesive material, and active ingredients in the adhesive material comprise fly ash and silicate cement. The mass fraction of the fly ash in the active ingredients is at most 80%. The adhesive material further comprises an activator, and the activator comprises at least one of a chloride of an alkali metal or an alkaline earth metal and a formate of an alkali metal or an alkaline earth metal. The dry-mixed mortar has comparable or even better performance due to replacing a majority of cement with fly ash, and because the amount of use of cement is greatly reduced, the energy consumption and carbon emission during product production are remarkably reduced; and the utilization of waste can reduce pollution to the environment.

## Description

### Technical Field

The present disclosure relates to the field of building materials, and in particular to an adhesive mortar, especially an adhesive material, an activating material, a dry-mixed mortar and an adhesive mortar slurry.

### Background

In the field of building materials, adhesive materials are widely used. For example, they are used to bond sheets, tiles, or the like. Typically, such adhesive materials are compositions with the major component of cement. For example, the mass proportion of cement may be as high as 80-90%, or even higher.

However, the preparation of cement consumes a lot of energy and causes huge pollution. For the purpose of emission reduction and environmental protection, it is always desirable in the field to reduce the cement used in the adhesive material until it is completely replaced.

Fly ash is fine ash collected from the flue gas after coal combustion, and it is the main solid waste discharged from coal-fired power plants. With the development of the power industry, the discharge amount of fly ash from coal-fired power plants has increased year by year, making it one of the industrial solid wastes with large discharge volume in the country at present. If a large amount of fly ash is not treated, it will generate dust and pollute the atmosphere. If discharged into water systems, it will cause silting of rivers, and the toxic chemical substances contained therein will also cause harm to human beings and organisms. However, fly ash can be recycled, for example, used as a mixture of concrete or the like.

### Summary

An object of the present disclosure is to replace cement with fly ash in the adhesive mortar, especially to replace most of the cement in traditional cement-based ceramic tile adhesives.

Accordingly, according to a first aspect of the present disclosure, provided is an adhesive material, comprising, in parts by weight, the following components: 25-40 parts of an active material, wherein the active material comprises fly ash and Portland cement; and up to 2.5 parts of an activator, wherein the activator comprises at least one of an alkali metal or alkaline earth metal chloride and an alkali metal or alkaline earth metal formate.

In a further embodiment, based on the total weight of the active material, the active material comprises up to 80% of the fly ash, or up to 70% of the fly ash, or up to 60% of the fly ash, with the balance being the Portland cement.

In an embodiment, the alkali metal or alkaline earth metal formate is present in amount of up to 1 part by weight, or up to 0.75 parts by weight, the alkali metal or alkaline earth metal chloride is present in amount of up to 1.5 parts by weight. In a further embodiment, a ratio of the weight of the alkali metal or alkaline earth metal formate to the weight of the alkali metal or alkaline earth metal chloride is 1:0.5-6.

In an embodiment, the alkali metal or alkaline earth metal formate is sodium formate, calcium formate, potassium formate, magnesium formate or lithium formate; the alkali metal or alkaline earth metal chloride is lithium chloride, magnesium chloride, calcium chloride, potassium chloride or sodium chloride.

In an embodiment, the activator comprises the alkali metal or alkaline earth metal formate and further comprises an alkali metal or alkaline earth metal hydroxide. In an embodiment, the alkali metal or alkaline earth metal hydroxide is present in an amount of up to 2 parts by weight, or up to 1 part by weight, or up to 0.5 parts by weight. The alkali metal or alkaline earth metal hydroxide is sodium hydroxide, calcium hydroxide, potassium hydroxide, magnesium hydroxide or lithium hydroxide.

In an embodiment, the activator comprises the alkali metal or alkaline earth metal formate and further comprises an alkali metal or alkaline earth metal tripolyphosphate. In an embodiment, the alkali metal or alkaline earth metal tripolyphosphate is present in an amount of up to 0.5 parts. The alkali metal or alkaline earth metal tripolyphosphate is sodium tripolyphosphate, lithium tripolyphosphate, potassium tripolyphosphate, calcium tripolyphosphate.

According to another aspect of the present disclosure, provided is an activating material for an inorganic active ingredient, comprising a combination selected from an alkali metal or alkaline earth metal formate, an alkali metal or alkaline earth metal chloride, an alkali metal or alkaline earth metal hydroxide, and an alkali metal or alkaline earth metal tripolyphosphate.

In a further embodiment, the activating material is a combination of the alkali metal or alkaline earth metal formate and the alkali metal or alkaline earth metal chloride, the alkali metal or alkaline earth metal hydroxide or the alkali metal or alkaline earth metal tripolyphosphate; or the activating material is a combination of the alkali metal or alkaline earth metal formate, the alkali metal or alkaline earth metal chloride and the alkali metal or alkaline earth metal hydroxide; or the activating material is a combination of the alkali metal or alkaline earth metal formate, the alkali metal or alkaline earth metal chloride and the alkali metal or alkaline earth metal tripolyphosphate; or the activating material is a combination of the alkali metal or alkaline earth metal formate, the alkali metal or alkaline earth metal hydroxide and the alkali metal or alkaline earth metal tripolyphosphate.

In an embodiment, the alkali metal or alkaline earth metal formate is present in amount of up to 1 part by weight, or up to 0.75 parts by weight; the alkali metal or alkaline earth metal chloride is present in amount of up to 1.5 parts by weight. In an embodiment, a ratio of the weight of the alkali metal or alkaline earth metal formate to the weight of the alkali metal or alkaline earth metal chloride is 1:0.5-6.

In an embodiment, the alkali metal or alkaline earth metal hydroxide is present in an amount of up to 2 parts by weight, or up to 1 part by weight, or up to 0.5 parts by weight.

In an embodiment, the alkali metal or alkaline earth metal tripolyphosphate is present in an amount of up to 0.5 parts by weight.

The alkali metal or alkaline earth metal formate is sodium formate, calcium formate, potassium formate, magnesium formate or lithium formate. The alkali metal or alkaline earth metal chloride is lithium chloride, magnesium chloride, calcium chloride, potassium chloride or sodium chloride.

The alkali metal or alkaline earth metal hydroxide is sodium hydroxide, calcium hydroxide, potassium hydroxide, magnesium hydroxide or lithium hydroxide.

The alkali metal or alkaline earth metal tripolyphosphate is sodium tripolyphosphate, lithium tripolyphosphate, potassium tripolyphosphate, calcium tripolyphosphate.

According to yet another aspect of the present disclosure, provided is a dry-mixed mortar comprising, in parts by weight, the following components: 25-40 parts of an active material, wherein the active material comprises fly ash and Portland cement; up to 2.5 parts of an activator, wherein the activator comprises at least one of an alkali metal or alkaline earth metal chloride and an alkali metal or alkaline earth metal formate; 0-20 parts of a filler; 45-65 parts of an aggregate; and 0-5 parts of an additive.

In an embodiment, based on the total weight of the active material, the active material comprises up to 80% of the fly ash, or up to 70% of the fly ash, or up to 60% of the fly ash, with the balance being the Portland cement.

In an embodiment, the alkali metal or alkaline earth metal formate is present in amount of up to 1 part by weight, or up to 0.75 parts by weight; the alkali metal or alkaline earth metal chloride is present in amount of up to 1.5 parts by weight. In a further embodiment, a ratio of the weight of the alkali metal or alkaline earth metal formate to the weight of the alkali metal or alkaline earth metal chloride is 1:0.5-6. The alkali metal or alkaline earth metal formate is sodium formate, calcium formate, potassium formate, magnesium formate or lithium formate. The alkali metal or alkaline earth metal chloride is lithium chloride, magnesium chloride, calcium chloride, potassium chloride or sodium chloride.

In a further embodiment, the activator comprises the alkali metal or alkaline earth metal formate and comprises an alkali metal or alkaline earth metal hydroxide. The alkali metal or alkaline earth metal hydroxide is present in an amount of up to 2 parts by weight, or up to 1 part by weight, or up to 0.5 parts by weight. The alkali metal or alkaline earth metal hydroxide is sodium hydroxide, calcium hydroxide, potassium hydroxide, magnesium hydroxide or lithium hydroxide.

In a further embodiment, the activator comprises the alkali metal or alkaline earth metal formate and comprises an alkali metal or alkaline earth metal tripolyphosphate, wherein the alkali metal or alkaline earth metal tripolyphosphate is present in an amount of up to 0.5 parts by weight. The alkali metal or alkaline earth metal tripolyphosphate is sodium tripolyphosphate, lithium tripolyphosphate, potassium tripolyphosphate, calcium tripolyphosphate.

In an embodiment, the additive comprises a redispersible latex powder, cellulose ether, or a combination thereof. The cellulose ether is present in an amount of up to 0.5 parts by weight. The redispersible latex powder is present in an amount of up to 3 parts by weight.

According to another aspect of the present disclosure, provided is an adhesive mortar slurry, comprising the above-mentioned dry-mixed mortar and water, wherein a weight ratio of the dry-mixed mortar to water is 100:20-100:25.

In the technical solutions of the present disclosure, fly ash is used to replace most of the cement, showing comparable or even better performance. In addition, since the amount of cement as used is greatly reduced, the energy consumption and carbon emission of product production are significantly reduced, and the utilization of waste can reduce environmental pollution.

### Detailed Description

Specific embodiments of the present disclosure are described below with reference to the accompanying drawings.

In the present disclosure, the term "up to" used to define the content of a component means that the content of the component is less than or equal to the specified value. The term "part by weight" refers to the weight unit having the same unit and same quantity. For example, 1 part by weight part may be a weight unit of 1 gram, or 1 kilogram, or 10 grams, or other values. "Weight fraction" refers to the weight proportion of a particular component relative to the basis, expressed as a percentage.

"Alkali metal" comprises lithium (Li), sodium (Na), potassium (K), rubidium (Rb), cesium (Cs). "Alkaline earth metal" comprises beryllium (Be), magnesium (Mg), calcium (Ca), strontium (Sr), barium (Ba). In the field, commonly used alkali metals comprise sodium, potassium and lithium, and commonly used alkaline earth metals comprise magnesium and calcium.

According to an object of the present disclosure, fly ash is used in place of most of Portland cement in the adhesive mortar, especially in the ceramic tile adhesive. At present, the fly ash is a common raw material for building products and is commercially available.

The combination of fly ash and Portland cement may serve as the active material of the adhesive material. In the present disclosure, based on the total weight of the active material, the weight fraction of fly ash is up to 80%, preferably up to 70%, more preferably up to 60%, and the balance is Portland cement.

The fly ash may be a product that satisfies the national standard, for example, the Chinese standard GB/T 1596-2017 "Fly ash used for cement and concrete". The Portland cement may be a product that satisfies the standard, such as the Chinese standard GB175-2020 "General Portland cement".

The activator is used in the adhesive material to activate the fly ash.

In an embodiment, the activator may be at least one of an alkali metal or alkaline earth metal chloride and an alkali metal or alkaline earth metal formate.

For example, the alkali metal or alkaline earth metal formate is sodium formate, calcium formate, potassium formate, magnesium formate or lithium formate, hereinafter simply referred to as formate. The alkali metal or alkaline earth metal chloride is lithium chloride, magnesium chloride, calcium chloride, potassium chloride or sodium chloride, hereinafter simply referred to as chloride.

In some embodiments, the activator is a formate. In some embodiments, the activator is a chloride. In some embodiments, the activator is a combination of a formate and a chloride.

Although in the tables below, examples with calcium formate, sodium chloride, and calcium chloride are provided, those skilled in the art will appreciate that other alkali metal or alkaline earth metal formates and chlorides are also feasible.

The activator may also comprise an alkali metal or alkaline earth metal hydroxide, for example, sodium hydroxide, calcium hydroxide, potassium hydroxide, magnesium hydroxide or lithium hydroxide, hereinafter referred to as hydroxide. The hydroxide may react with the fly ash. The use of hydroxide in the activator can supplement alkalinity, thereby improving strength, and can reduce the dosage of formate, thus lowering the cost.

In some embodiments, the activator may be a combination of the hydroxide and the formate. In other embodiments, the activator may be a combination of the hydroxide, the formate, and the chloride.

In the present disclosure, calcium hydroxide is used as an example, and those skilled in the art will appreciate that other hydroxides are also feasible.

In a further embodiment, the activator may also comprise an alkali metal or alkaline earth metal tripolyphosphate, for example, sodium tripolyphosphate, lithium tripolyphosphate, potassium tripolyphosphate, calcium tripolyphosphate, hereinafter referred to as tripolyphosphate. The use of tripolyphosphate in the activator can improve the Water Immersion Tensile Bond Strength of the final product.

In some embodiments, the activator may be a combination of the formate and the tripolyphosphate. In other embodiments, the activator may be a combination of the formate, the chloride, and the tripolyphosphate. Alternatively, in other embodiments, the activator may be a combination of the formate, the tripolyphosphate, and the hydroxide.

In the present disclosure, sodium tripolyphosphate is used as an example, and those skilled in the art will appreciate that other tripolyphosphates are also feasible.

In the adhesive material, in parts by weight, the total active material is present in an amount of 25-40 parts, and the total activator is present in an amount of up to 2.5 parts.

In an embodiment, the formate is present in amount of up to 1 part by weight, or the formate is present in amount of up to 0.75 parts by weight. The chloride is present in amount of up to 1.5 parts by weight. In particular, when the formate and the chloride are used in combination, a ratio of the weight of formate to the weight of chloride is 1:0.5-6.

In addition, in the activator, the hydroxide is present in amount of up to 2 parts by weight, or up to 1 part by weight, or up to 0.5 parts by weight. Further, the tripolyphosphate is present in amount of up to 0.5 parts by weight.

Accordingly, another embodiment of the present disclosure is an activating material comprising a combination of the above-mentioned activators, for activating an inorganic active ingredient. In an embodiment, the activating material is a combination of the hydroxide and the chloride. In another embodiment, the activating material is a combination of the hydroxide and the formate. In yet another embodiment, the activating material is a combination of the hydroxide, the formate, and the chloride. In yet another embodiment, the activating material is a combination of the formate and the tripolyphosphate. In yet another embodiment, the activating material is a combination of the formate, the chloride, and the tripolyphosphate. In yet another embodiment, the activating material is a combination of the formate, the hydroxide, and the tripolyphosphate. In an embodiment, the formate is present in amount of up to 1 part by weight, or up to 0.75 parts by weight; the chloride is present in amount of up to 1.5 parts by weight; the hydroxide is present in amount of up to 2 parts by weight, or up to 1 part by weight, or up to 0.5 parts by weight; the tripolyphosphate is present in amount of up to 0.5 parts by weight.

According to another embodiment of the present disclosure, a dry-mixed mortar prepared by using the above-mentioned adhesive material comprises the above-mentioned active material, the above-mentioned activator, a filler, an aggregate, and an additive. In an embodiment, in parts by weight, the active material is present in an amount of 25-40 parts, the activator is present in an amount of up to 2.5 parts, the filler is present in an amount of 0-20 parts, the aggregate is present in an amount of 45-65 parts, the additive is present in an amount of up to 5 parts.

In an embodiment, the filler and the aggregate are particles or powders, which play the roles of filling and supporting, respectively. The filler and the aggregate are differentiated by particle size, for example a fine aggregate can be used in place of a filler. Commonly used fillers comprise, e.g., limestone, or may also comprise other materials. Commonly used aggregates comprise sand, e.g., natural sand, river sand or manufactured sand, and the ISO standard sand is preferably used. Both the filler and aggregate used in the present disclosure are commercially available.

Cellulose ether is a polymer compound made from cellulose and having an ether structure. Generally, it can be used as a water retention agent to adjust the water retention of the product, such that the product has good operability. Typically, the cellulose ether is present in an amount of up to 0.5 parts by weight.

The redispersible latex powder is a water-soluble redispersible powder that can be quickly dispersed as an emulsion upon contact with water. Redispersible polymer powder is typically made by spray drying from raw materials such as polymer resin, protective colloid, anti-caking agent, and the like. The redispersible latex powder can adjust the alkaline resistance of the mortar, improve the adhesion, flexural strength, water resistance, plasticity, abrasion resistance, workability, and the like of the mortar. Those skilled in the art understand that addition of the redispersible latex powder can enhance the tensile bond strength of the ceramic tile adhesive, and the tensile bond strength increases as the amount of the redispersible latex powder increases. Typically, the redispersible latex powder is present in amount of up to 3 parts by weight.

The polymer resin in the redispersible latex powder may include, but not limited to, vinyl acetate/ethylene copolymer, styrene/butadiene copolymer, vinyl acetate/vinyl neodecanoate copolymer, or the like.

In another embodiment, the above-mentioned dry-mixed mortar is mixed with water to obtain an adhesive mortar slurry. In an embodiment, a weight ratio of the dry-mixed mortar to water is 100:20-100:25.

### Examples

Tables 1-5 show examples of various adhesive slurries corresponding to different combinations of the activators, and different contents of fly ash in the active materials, respectively. According to the weight parts shown in Tables 1-5, and according to the methods and standards specified in JC/T 547-2017 "Ceramic Tile Adhesives", the samples were prepared and tested for tensile bond strength in megapascals (MPa).

In Table 1, different combinations of calcium formate and sodium chloride were used as the activators in Examples 1-8. The tensile bond strength test results are shown in Table 1. Boh 7-Day and 28-Day Tensile Bond Strength of the samples increases as the amount of activator increases.

**Table 1**

| | Example 1 | Example 2 | Example 3 | Example 4 | Example 5 | Example 6 | Example 7 | Example 8 |
|---|---|---|---|---|---|---|---|---|
| Fly Ash | 21 | 21 | 21 | 21 | 21 | 21 | 21 | 21 |
| Portland cement | 14 | 14 | 14 | 14 | 14 | 14 | 14 | 14 |
| Calcium Formate | 0.5 | 0.5 | 0.5 | 0.5 | 0.5 | 0.75 | 0.25 | 0 |
| Sodium Chloride | 0 | 0.25 | 0.5 | 1 | 1.5 | 1.5 | 1.5 | 1.5 |
| Filler | 9.2 | 8.95 | 8.7 | 8.2 | 7.7 | 7.45 | 7.95 | 8.2 |
| Aggregate | 55 | 55 | 55 | 55 | 55 | 55 | 55 | 55 |
| Cellulose Ether | 0.3 | 0.3 | 0.3 | 0.3 | 0.3 | 0.3 | 0.3 | 0.3 |
| Water | 22 | 22 | 22 | 22 | 22 | 22 | 22 | 22 |
| 1-Day Tensile Bond Strength | 0.41 | 0.38 | 0.41 | 0.41 | 0.41 | 0.64 | 0.4 | 0.35 |
| 7-Day Tensile Bond Strength | 0.63 | 1.06 | 1.15 | 1.25 | 1.39 | 1.78 | 1.32 | 0.89 |
| 28-Day Tensile Bond Strength | 0.8 | 1.18 | 1.21 | 1.31 | 1.46 | 1.94 | 1.44 | 1.26 |
| 28-Day Water Immersion Tensile Bond Strength | 0.4 | 0.44 | 0.56 | 0.7 | 0.89 | 0.94 | 0.77 | 0.7 |

In Example 9 and Example 10 given in Table 2, the weight fractions of fly ash in the active material are 70% and 80%, respectively, and the test results are shown in Table 2. Under the same activator combination and amount, referring to Example 5, as the amount of fly ash increases, the tensile bond strength of the sample decreases. However, no redispersible latex powder is used in Example 9 and Example10. As is known to those skilled in the art, the use of redispersible latex powder can enhance the tensile bond strength, and the tensile bond strength increases as the amount of the redispersible latex powder increases. Therefore, the tensile bond strength can be enhanced by using the redispersible latex powder in Example 9 and Example 10. In particular, the amount of the redispersible latex powder can be increased in the formulation of Example 10 to make the final product at least meet the requirements of C0 grade ceramic tile adhesive, referring to the Chinese standard GB/T 25181-2019 "Premixed Mortar".

**Table 2**

| | Example 9 | Example 10 |
|---|---|---|
| Fly Ash | 24.5 | 28 |
| Portland cement | 10.5 | 7 |
| Calcium Formate | 0.5 | 0.5 |
| Sodium Chloride | 1.5 | 1.5 |
| Filler | 7.7 | 7.7 |
| Aggregate | 55 | 55 |
| Cellulose Ether | 0.3 | 0.3 |
| Water | 22 | 22 |
| 1-Day Tensile Bond Strength | 0.34 | 0.18 |
| 7-Day Tensile Bond Strength | 0.71 | 0.19 |
| 28-Day Tensile Bond Strength | 1.06 | 0.39 |
| 28-Day Water Immersion Tensile Bond Strength | 0.47 | 0.11 |

Table 3 gives an example where calcium chloride was used. It can be seen that the formulation with calcium chloride also meets the standard requirements.

**Table 3**

| | Example 11 |
|---|---|
| Fly Ash | 21 |
| Portland cement | 14 |
| Calcium Formate | 0.5 |
| Calcium Chloride | 0.5 |
| Filler | 8.7 |
| Aggregate | 55 |
| Cellulose Ether | 0.3 |
| Water | 22 |
| 1-Day Tensile Bond Strength | 0.45 |
| 7-Day Tensile Bond Strength | 0.81 |
| 28-Day Tensile Bond Strength | 0.83 |
| 28-Day Water Immersion Tensile Bond Strength | 0.62 |

Table 4 gives examples where calcium hydroxide was used in the activator. The use of calcium hydroxide can supplement alkalinity, which is beneficial to strength improvement. Compared to Example 1, using the activator of a combination of calcium formate and calcium hydroxide, the samples had higher 28-Day Tensile Bond Strength.

**Table 4**

| | Example 12 | Example 13 | Example 14 | Example 15 |
|---|---|---|---|---|
| Fly Ash | 21 | 21 | 21 | 21 |
| Portland cement | 14 | 14 | 14 | 14 |
| Calcium Formate | 0.5 | 0.5 | 0.5 | 0.5 |
| Sodium Chloride | 0 | 0 | 0 | 0.5 |
| Calcium hydroxide | 1 | 2 | 0.5 | 0.5 |
| Filler | 8.2 | 8.7 | 8.7 | 8.2 |
| Aggregate | 55 | 55 | 55 | 55 |
| Cellulose Ether | 0.3 | 0.3 | 0.3 | 0.3 |
| Water | 22 | 22 | 22 | 22 |
| 1-Day Tensile Bond Strength | 0.35 | 0.46 | 0.5 | 0.4 |
| 7-Day Tensile Bond Strength | 1.13 | 1.01 | 0.64 | 1.1 |
| 28-Day Tensile Bond Strength | 1.25 | 1.36 | 1.01 | 1.25 |
| 28-Day Water Immersion Tensile Bond Strength | 0.59 | 0.35 | 0.64 | 0.7 |

In the examples given in Table 5, as the activator comprised sodium tripolyphosphate, the samples had higher 28-day Water Immersion Tensile Bond Strength.

**Table 5**

| | Example 16 | Example 17 | Example 18 | Example 19 | Example 20 |
|---|---|---|---|---|---|
| Fly Ash | 21 | 21 | 21 | 21 | 21 |
| Portland cement | 14 | 14 | 14 | 14 | 14 |
| Calcium Formate | 0.25 | 0 | 0.5 | 0.25 | 0.5 |
| Sodium Chloride | 1 | 0.5 | 0 | 0.5 | 0 |
| Sodium Tripolyphosphate | 0.25 | 0.5 | 0.5 | 0.25 | 0.5 |
| Calcium hydroxide | 0 | 0 | 0 | 0 | 0.5 |
| Filler | 8.2 | 8.7 | 8.7 | 8.7 | 8.2 |
| Aggregate | 55 | 55 | 55 | 55 | 55 |
| Cellulose Ether | 0.3 | 0.3 | 0.3 | 0.3 | 0.3 |
| Water | 22 | 22 | 22 | 22 | 22 |
| | | | | | |
| 1-Day Tensile Bond Strength | 0.37 | 0.2 | 0.36 | 0.25 | 0.14 |
| 7-Day Tensile Bond Strength | 1.09 | 0.4 | 0.62 | 0.69 | 0.84 |
| 28-Day Tensile Bond Strength | 1.53 | 1.04 | 1.38 | 1.22 | 0.76 |
| 28-Day Water Immersion Tensile Bond Strength | 0.75 | 0.66 | 0.83 | 0.6 | 0.71 |

In the above description, details of the technical solutions of the present disclosure are described, however, those skilled in the art will appreciate that the present disclosure is not limited to the specific details listed in the above examples but may be changed within the scope defined by the claims.

## Claims

1. An adhesive material, comprising, in parts by weight, the following components:
25-40 parts of an active material, wherein the active material comprises fly ash and Portland cement; and
up to 2.5 parts of an activator, wherein the activator comprises at least one of an alkali metal or alkaline earth metal chloride and an alkali metal or alkaline earth metal formate.

2. The adhesive material according to claim 1, wherein,
based on the total weight of the active material, the active material comprises up to 80% of the fly ash, or up to 70% of the fly ash, or up to 60% of the fly ash, with the balance being the Portland cement.

3. The adhesive material according to claim 1, wherein,
the alkali metal or alkaline earth metal formate is present in amount of up to 1 part by weight, or up to 0.75 parts by weight;
the alkali metal or alkaline earth metal chloride is present in amount of up to 1.5 parts by weight.

4. The adhesive material according to claim 3, wherein,
a ratio of the weight of the alkali metal or alkaline earth metal formate to the weight of the alkali metal or alkaline earth metal chloride is 1:0.5-6.

5. The adhesive material according to claim 1, wherein,
the alkali metal or alkaline earth metal formate is sodium formate, calcium formate, potassium formate, magnesium formate or lithium formate;
the alkali metal or alkaline earth metal chloride is lithium chloride, magnesium chloride, calcium chloride, potassium chloride or sodium chloride.

6. The adhesive material according to claim 1, wherein,
the activator comprises the alkali metal or alkaline earth metal formate, and further comprises an alkali metal or alkaline earth metal hydroxide, wherein the alkali metal or alkaline earth metal hydroxide is present in amount of up to 2 parts by weight, or up to 1 part by weight, or up to 0.5 parts by weight.

7. The adhesive material according to claim 6, wherein,
the alkali metal or alkaline earth metal hydroxide is sodium hydroxide, calcium hydroxide, potassium hydroxide, magnesium hydroxide, or lithium hydroxide.

8. The adhesive material according to any one of claims 1-7, wherein,
the activator comprises the alkali metal or alkaline earth metal formate, and further comprises an alkali metal or alkaline earth metal tripolyphosphate, wherein the alkali metal or alkaline earth metal tripolyphosphate is present in amount of up to 0.5 parts by weight.

9. The adhesive material according to claim 8, wherein,
the alkali metal or alkaline earth metal tripolyphosphate is sodium tripolyphosphate, lithium tripolyphosphate, potassium tripolyphosphate, or calcium tripolyphosphate.

10. An activating material for an inorganic active ingredient, comprising a combination selected from an alkali metal or alkaline earth metal formate, an alkali metal or alkaline earth metal chloride, an alkali metal or alkaline earth metal hydroxide, and an alkali metal or alkaline earth metal tripolyphosphate.

11. The activating material for an inorganic active ingredient according to claim 10, wherein,
the activating material is a combination of the alkali metal or alkaline earth metal formate and the alkali metal or alkaline earth metal chloride, the alkali metal or alkaline earth metal hydroxide or the alkali metal or alkaline earth metal tripolyphosphate, or
the activating material is a combination of the alkali metal or alkaline earth metal formate, the alkali metal or alkaline earth metal chloride and the alkali metal or alkaline earth metal hydroxide, or
the activating material is a combination of the alkali metal or alkaline earth metal formate, the alkali metal or alkaline earth metal chloride and the alkali metal or alkaline earth metal tripolyphosphate, or
the activating material is a combination of the alkali metal or alkaline earth metal formate, the alkali metal or alkaline earth metal hydroxide and the alkali metal or alkaline earth metal tripolyphosphate.

12. The activating material for an inorganic active ingredient according to claim 10 or 11, wherein,
the alkali metal or alkaline earth metal formate is present in amount of up to 1 part by weight, or up to 0.75 parts by weight, and the alkali metal or alkaline earth metal chloride is present in amount of up to 1.5 parts by weight.

13. The activating material for an inorganic active ingredient according to claim 11, wherein,
a ratio of the weight of the alkali metal or alkaline earth metal formate to the weight of the alkali metal or alkaline earth metal chloride is 1:0.5-6.

14. The activating material for an inorganic active ingredient according to claim 10 or 11, wherein,
the alkali metal or alkaline earth metal hydroxide is present in amount of up to 2 parts by weight, or up to 1 part by weight, or up to 0.5 parts by weight.

15. The activating material for an inorganic active ingredient according to claim 10 or 11, wherein,
the alkali metal or alkaline earth metal tripolyphosphate is present in amount of up to 0.5 parts by weight.

16. The activating material for an inorganic active ingredient according to claim 10 or 11, wherein,
the alkali metal or alkaline earth metal formate is sodium formate, calcium formate, potassium formate, magnesium formate or lithium formate;
the alkali metal or alkaline earth metal chloride is lithium chloride, magnesium chloride, calcium chloride, potassium chloride or sodium chloride;
the alkali metal or alkaline earth metal hydroxide is sodium hydroxide, calcium hydroxide, potassium hydroxide, magnesium hydroxide or lithium hydroxide;
the alkali metal or alkaline earth metal tripolyphosphate is sodium tripolyphosphate, lithium tripolyphosphate, potassium tripolyphosphate or calcium tripolyphosphate.

17. A dry-mixed mortar, comprising, in parts by weight, the following components:
25-40 parts of an active material, wherein the active material comprises fly ash and Portland cement;
up to 2.5 parts of an activator, wherein the activator comprises at least one of an alkali metal or alkaline earth metal chloride and an alkali metal or alkaline earth metal formate;
0-20 parts of a filler;
45-65 parts of an aggregate; and
0-5 parts of an additive.

18. The dry-mixed mortar according to claim 17, wherein,
based on the total weight of the active material, the active material comprises up to 80% of the fly ash, or up to 70% of the fly ash, or up to 60% of the fly ash, with the balance being the Portland cement.

19. The dry-mixed mortar according to claim 17, wherein,
the alkali metal or alkaline earth metal formate is present in amount of up to 1 part by weight, or up to 0.75 parts by weight;
the alkali metal or alkaline earth metal chloride is present in amount of up to 1.5 parts by weight.

20. The dry-mixed mortar according to claim 19, wherein,
a ratio of the weight of the alkali metal or alkaline earth metal formate to the weight of the alkali metal or alkaline earth metal chloride is 1:0.5-6.

21. The dry-mixed mortar according to claim 0, wherein,
the alkali metal or alkaline earth metal formate is sodium formate, calcium formate, potassium formate, magnesium formate or lithium formate;
the alkali metal or alkaline earth metal chloride is lithium chloride, magnesium chloride, calcium chloride, potassium chloride or sodium chloride.

22. The dry-mixed mortar according to claim 17, wherein,
the activator comprises the alkali metal or alkaline earth metal formate, and further comprises an alkali metal or alkaline earth metal hydroxide, wherein the alkali metal or alkaline earth metal hydroxide is present in amount of up to 2 parts by weight, or up to 1 part by weight, or up to 0.5 parts by weight.

23. The dry-mixed mortar according to claim 0, wherein,
the alkali metal or alkaline earth metal hydroxide is sodium hydroxide, calcium hydroxide, potassium hydroxide, magnesium hydroxide or lithium hydroxide.

24. The dry-mixed mortar according to claim 17, wherein,
the activator comprises the alkali metal or alkaline earth metal formate, and further comprises an alkali metal or alkaline earth metal tripolyphosphate, wherein the alkali metal or alkaline earth metal tripolyphosphate is present in an amount of up to 0.5 parts.

25. The dry-mixed mortar according to claim 24, wherein,
the alkali metal or alkaline earth metal tripolyphosphate is sodium tripolyphosphate, lithium tripolyphosphate, potassium tripolyphosphate, or calcium tripolyphosphate.

26. The dry-mixed mortar according to claim 17, wherein,
the additive comprises a redispersible latex powder, cellulose ether, or a combination thereof.

27. The dry-mixed mortar according to claim 26, wherein,
the cellulose ether is present in an amount of up to 0.5 parts by weight;
the redispersible latex powder is present in an amount of up to 3 parts by weight.

28. An adhesive mortar slurry, comprising the dry-mixed mortar according to any one of claims 17-27, and water, wherein a weight ratio of the dry-mixed mortar to water is 100:20-100:25.
